# EUROPEAN PATENT APPLICATION

(11) **EP 4 825 557 A2**
(43) Date of publication of application: **21.10.2026**
(21) Application number: 25222463.9
(22) Date of filing: 11.12.2025
(51) Int. Cl.: B29B 17/00, B29B 17/04, B29K 69/00

(54) **METHOD FOR PRODUCING RECYCLED RESIN AND RECYCLED RESIN**

(30) Priority: 13.02.2025 JP 2025021567
(71) Applicant: ETRIA Co., Ltd., Yokohama, Kanagawa 220-0011 (JP)
(72) Inventor: SUZUKI, Akira, Kanagawa, 220-0011 (JP)
(74) Representative: SSM Sandmair

(57) **Abstract**

A method for producing a recycled resin is provided that includes: collecting, as a collected material, a resin product comprising a thermoplastic resin as a part of a product used in a market; removing seals and particles adhering to the collected material; crushing the collected material after the removing to obtain a crushed material; and mixing and kneading the crushed material with a Charpy strength modifier to obtain a recycled resin. The thermoplastic resin has a flame-retardant property equivalent to 5V and comprises: (A) a PC resin; (B) a PC/ABS resin; or (C) a mixture of a PC resin and a PC/ABS resin. The recycled resin has a content of the Charpy strength modifier of less than 10% by mass, a flame-retardant property equivalent to 5V, and a bending elastic modulus of 2500 MPa or more and a Charpy impact strength of 5.0 kJ/m² or more.

## Description

### BACKGROUND

### Technical Field

The present disclosure relates to a method for producing a recycled resin and to a recycled resin.

### Related Art

A recycled resin (i.e., recycled plastic) is a plastic material produced by taking out and recycling a plastic when the plastic is used as a product in the market and the product is collected from the market.

The plastic is recycled as a material, which contributes to the environment.

A method for producing a recycled resin is already known in which plastics collected from the market are used and various additives are added to the collected plastics to recover the quality.

For example, Japanese Unexamined Patent Application Publication No. 2005-289047 discloses the following method for producing a recycled resin molded article.

The method for producing a recycled resin molded article includes a crushing step of crushing a collected material of a resin product including a resin material; a stirring step of mixing the resin material crushed in the crushing step with a drip inhibitor for inhibiting dripping of the resin material during combustion; a putting step of putting a mixture of the drip inhibitor and the resin material mixed in the stirring step into a resin molding machine; and a molding step of molding the mixture of the drip inhibitor and the resin material.

However, according to conventional methods for producing recycled resins, a large amount of additive are added in order to recover the quality.

When a large amount of additive is added, the content of the additive in the recycled resin increases, and the ratio of the collected material in the recycled resin tends to decrease. The ratio of the collected material in the recycled resin is expressed as a cutting rate or a collected material loading rate. Conventional recycled resins contain a large amount of additive to recover the quality and the cutting rate (collected material loading rate) does not reach 90% or more.

### SUMMARY

The present disclosure has an object to produce a recycled resin having a flame-retardant property of 5V in the UL flammability test, and a bending elastic modulus of 2500 MPa or more and a Charpy impact strength of 5.0 kJ/m² or more, as strength properties, at a cutting rate (i.e., collected material loading rate) of 90% or more.

Embodiments of the present invention provides a method for producing a recycled resin. The method includes: collecting, as a collected material, a resin product comprising a thermoplastic resin as a part of a product used in a market; removing seals and particles adhering to the collected material collected in the collecting; crushing the collected material after the removing to obtain a crushed material; and mixing and kneading the crushed material obtained in the crushing with a Charpy strength modifier for a polycarbonate resin to obtain a recycled resin. The thermoplastic resin has a flame-retardant property equivalent to 5V and comprises at least one selected from the group consisting of (A), (B), and (C) below: (A) a polycarbonate resin; (B) a mixed resin of a polycarbonate resin with an acrylonitrile-butadiene-styrene copolymer resin; and (C) a mixture of a polycarbonate resin and a mixed resin of a polycarbonate resin with an acrylonitrile-butadiene-styrene copolymer resin. The recycled resin has: a content of the Charpy strength modifier of less than 10% by mass, a flame-retardant property equivalent to 5V, and a bending elastic modulus of 2500 MPa or more and a Charpy impact strength of 5.0 kJ/m² or more.

According to embodiments of the present invention, a recycled resin having a flame-retardant property of 5V in the UL flammability test, and a bending elastic modulus of 2500 MPa or more and a Charpy impact strength of 5.0 kJ/m² or more, as strength properties, can be produced at a high cutting rate (i.e., collected material loading rate).

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a", "an", and "the" are intended to include the plural forms as well, unless the context clearly indicates otherwise.

Generally, a commercially available recycled resin (maybe also referred to as "recycled material" or "recycled plastic") includes a recycled collected resin (maybe also referred to as "collected material" or "collected plastic") and an additive for improving the quality of the recycled resin.

The recycled resin desirably has a certain quality, and the desirable quality can be achieved by selecting an additive and adding a large amount of additive.

However, when a large amount of additive is added in order to ensure the quality of the recycled resin, the cutting rate (i.e., collected material loading rate) decreases.

Generally, a commercially available recycled resin (i.e., recycled material, recycled plastic) includes an additive in an amount of 20% or more, and as a result, the cutting rate (i.e., collected material loading rate) has an upper limit of 80%.

The amount of additive can be reduced by increasing the cutting rate (i.e., collected material loading rate) to 90% or more. In addition, since the additive is a new material, the smaller the added amount, the more environmentally friendly the material becomes.

In the present disclosure, in attempting to ensure the quality of the recycled resin and increase the cutting rate (i.e., collected material loading rate), the following study was conducted.

### (Study (1) on Collected Resins (Collected Materials, Collected Plastics))

- Plastics of in-house products (e.g., printers) used in the market were collected.
- Plastics of in-house products (e.g., printers) originally includes flame-retardants and various additives for improving strength.
- By using a collected resin (i.e., collected material, collected plastic) including various additives, it is possible to reduce the amount of additive to be newly added.
- Plastics of in-house products (e.g., printers) originally include an additive, but since what is included in the additive is grasped, the originally included additive can be used up.
- With respect to the additive to be newly added, the same kind of additive as the originally added additive can be added.
- This makes it possible to reduce the amount of additive to be newly added.

### (Study (2) on Collected Resin (Collected Material, Collected Plastic))

- By blending (i.e., mixing) the collected resin (i.e., collected material, collected plastic) with two kinds of materials, it is possible to be similar to the desirable property.
- The desirable property includes flame retardancy and strength property.
- The materials include polycarbonate resin ("PC resin") and a mixed resin ("PC/ABS resin") of polycarbonate resin with acrylonitrile-butadiene-styrene copolymer resin and, in general, PC resin is higher in the flame retardancy and the Charpy strength property than PC/ABS resin.
- By adding PC resin as a collected resin to PC/ABS resin as a collected resin by utilizing this property, the desirable property can be realized without adding a large amount of additive.

In the material recycling of plastic closed-loop material recycling ("PCMR"), the thermoplastic resin is a part of the product used in the market, and the part uses a material having a flame-retardant property equivalent to 5V as a collected material, and therefore a content of the additive for recovering the quality in the recycled resin may be less than 10% by mass, and as a result, the cutting rate (i.e., collected material loading rate) can be increased.

The collected resin (i.e., collected material, collected plastic) are described below.

### <Thermoplastic Resin>

As the thermoplastic resin, the following can be used.

### (PC Resin)

Examples of a polycarbonate resin ("PC resin") may include, but are not limited to, an aromatic homopolycarbonate resin or a copolycarbonate resin obtained by reacting an aromatic divalent phenol compound with phosgene or a carbonic acid diester. Examples of the aromatic divalent phenol compound include, but are not limited to, 2,2-bis(4-hydroxyphenyl)propane, 2,2-bis(4-hydroxy-3,5-dimethylphenyl)propane, bis(4-hydroxyphenyl)methane, 1,1-bis(4-hydroxyphenyl)ethane, 2,2-bis(4-hydroxyphenyl)butane, 2,2-bis(4-hydroxy-3,5-diphenyl)butane, 2,2-bis(4-hydroxy-3,5-diethylphenyl)propane, 1,1-bis(4-hydroxyphenyl)cyclohexane, and 1-phenyl-1,1-bis(4-hydroxyphenyl)ethane. Each of these may be used alone or as a mixture with others.

### (PC/ABS Resin)

A PC/ABS resin is a mixed resin of a PC resin with an acrylonitrile-butadiene-styrene copolymer resin ("ABS resin"). Instead of the PC/ABS resin, a block copolymer of a PC resin and an ABS resin may be used.

### (Recycled Material)

As the above-described resin, a recycled plastic material (i.e., collected plastic material) may be used.

Examples of the recycled material include plastics collected from products such as printers, but the recycled material may be a market-collected material collected from the market, and may include, for example, recycled plastic materials (i.e., collected plastic materials) of household electrical appliances such as air conditioners, televisions, refrigerators, and washing machines, and used office automation (OA) equipment.

### (Method for Producing Recycled Resin)

The method for producing the recycled resin according to embodiments of the present invention includes the following steps.
(a) A step of collecting, as a collected material, a part of a product used in the market
(b) A step of removing seals and particles adhering to the part (i.e., collected material) collected in the above step (a)
(c) A step of crushing the part (i.e., collected material) after the above step (b) to obtain a crushed material
(d) A step of mixing and kneading the crushed material obtained in the above step (c) with a Charpy strength modifier for a PC resin to obtain a recycled resin

Each step of the above-described method for producing the recycled resin will be described below.

### <Step (a)>

The step (a) is a step of collecting a part of a resin product that includes a thermoplastic resin and is used in the market.

The collected plastic (i.e., collected material) includes a thermoplastic resin.

The thermoplastic resin is a PC resin, a PC/ABS resin, or a mixture of a PC resin and a PC/ABS resin.

In addition, the thermoplastic resin included in the above-described collected material has a flame-retardant property equivalent to 5V of the UL standard.

The thermoplastic resin included in a collected material (i.e., collected plastic) is obtained by collecting a part of a printer that is a product used in the market. The collected part of the printer is used in the market and thus has dust and dirt, particles, or seals attached to the part of the printer, which are to be removed.

As an example of the collected material, a printer of an in-house product will be described below.

As the collected material, for example, an in-house printer used in the market for about 5 to 10 years after being sold is collected.

Various plastic parts of the printer are targets to be collected, but the most frequently collected member is a member that is called an exterior board (i.e., exterior part, exterior plate) and serves as an outer frame of the printer main body. Other examples of the parts to be collected include parts around an exhaust duct used in the printer, a case for storing paper or the like, and a cover for protecting each function such as development.

Since exterior boards of general printers placed in offices or convenience stores are large in size and heavy in weight, the exterior boards can be recycled more efficiently than small parts.

With regard to collection, the printers collected from users are collected in recycling centers located all over the country, where workers manually remove and collect the exterior boards of the printers. Since the exterior board collected here is crushed in the subsequent step, there is no problem even if the exterior board is cracked or damaged.

### <Step (b)>

The step (b) is a step of removing seals and particles adhering to the part collected in the above step (a).

The collected parts are parts that have been used by the user for 5 to 10 years, and therefore particles such as dust and dirt are accumulated in uneven portions of the parts.

The dust can be removed by blowing air. Further, in the case where the toner residue sticks to the part, the residue can be removed by washing with water.

The seals attached to the printer become impurities when the plastic is recycled as a material, and causes deteriorations in the quality of the recycled resin, and therefore, the seals are to be removed.

When such seals are not removed and recycled as materials, the strength of the plastic may be reduced.

Any method for removing the seals may be used as long as the seals can be peeled off, and examples include a dry type removing method for removing the seal by polishing with a belt-type file, or the like, and a wet type removing method for removing the seal by water pressure using jetting of high-pressure water.

At the time of shipment of a printer, stickers on which information about the apparatus, such as a manufacturing lot, and a contact address at the time of failure are described may be attached to a product as the seals. Compatible seals are used as such seals.

For example, in a case where a PC/ABS resin is used as a material and a seal including an ABS resin is used, when a recycled resin is produced from a collected material, the compatible seal needs not be peeled off. This is because the plastic material is heated and melted in the kneading step, but at this time, the seal including the ABS resin is also melted together, and is mixed with the PC/ABS resin forming the part to become the same material, so that the quality of the recycled resin after recycling is not deteriorated.

### <Step (c)>

The step (c) is a step of crushing the part after the above step (b) and obtaining the crushed material.

At the time of crushing, a crusher corresponding to 10 to 100 horsepower is used. The crush size can be adjusted by a metal perforated filter attached to the crusher, and it is possible to perform crushing to a size suitable for kneading in the subsequent step.

The size of the metal hole preferably has a diameter φ of about 10 mm to 20 mm, and crushed pieces having a size passing through the metal hole can be produced.

The crushing way is not particularly limited, and for example, a granulator (SPCII-750) manufactured by Hermo Co., Ltd. can be used.

When the exterior board is put into the granulator, the metal blades inside the granulator are rotated to crush the exterior board. The crush size is about 5 mm x 5 mm, and with this size, the kneading in the subsequent step can be performed without any problem. In addition, when the exterior board is as large as 600 mm x 800 mm, it is possible to make a request to a plastic crushing manufacturer as appropriate. Examples of the plastic crushing manufacturer include Wado Shoji Co., Ltd.

### <Step (d)>

The step (d) is a step of mixing and kneading the crushed material obtained in the above step (c) with a Charpy strength modifier for a PC resin to obtain a recycled resin.

In the step (d), in addition to the Charpy strength modifier, a flame-retardant for improving flame retardancy and an inorganic filler for improving bending strength and tensile strength can be added as additives.

As the Charpy strength modifier, a Charpy strength modifier for PC resins is used.

As the Charpy strength modifier for PC resins, for example, an impact strength modifier manufactured by Mitsubishi Chemical Corporation (product name: METABLEN (product number: C-223A, rubber ingredient)) can be used.

This Charpy strength modifier is a Charpy strength modifier for PC resins, and in a sea-island structure of a PC/ABS resin, the Charpy strength modifier can be dissolved in the PC resin or can be coordinated to the PC resin, and when a PC resin is used as a collected material, the Charpy strength modifier can improve the Charpy impact strength of a recycled resin.

As a method for uniformly mixing the respective components included in the resin composition, a melting kneading method can be suitably adopted.

In this kneading step, the above-described components are kneaded using a kneader known in the art, such as a TUMBLER MIXER, a HENSCHEL MIXER, a BANBURY MIXER, a roll, a single-screw kneading extruder, a twin-screw kneading extruder, or a kneader available from Brabender GmbH & Co KG, while appropriately adjusting conditions such as a kneading speed, a kneading temperature, and a kneading time.

For example, the above components may be mixed in advance using a TUMBLER MIXER or a HENSCHEL MIXER, then melt-kneaded using a BANBURY MIXER, a roll, a single-screw extruder, a twin-screw extruder, or a kneader available from Brabender GmbH & Co KG. Alternatively, for example, the components may be put into an extruder using a feeder and melted and kneaded without being mixed in advance.

The kneading temperature is determined based on the melting temperature (Tm) of the thermoplastic resin.

Like the glass transition temperature (Tg), Tm may be measured by means of DSC (differential scanning calorimetry), TMA (thermomechanical analysis), DTA (differential thermal analysis), or a rheometer that can change the temperature. The resin composition according to an embodiment of the present invention is easily produced by performing the kneading at around Tm that is measured by these means.

As an example of kneading conditions, raw materials are blended at a predetermined composition ratio (parts by mass) by a twin-screw kneading extruder, and kneaded at a cylinder temperature of 230°C to 240°C using a twin-screw melting kneading extruder (manufactured by Technovel Corporation) having a screw diameter of 25 mm and a screw effective length L/D = 26 as a kneader to obtain a resin composition.

Next, a method for evaluating the recycled resin obtained by the above-described method for producing the recycled resin will be described.

### (Flame Retardancy Test)

A flame-retardancy test was performed in accordance with the UL 94 (i.e., test for flammability of plastic materials for parts in devices) released by Underwriters Laboratories Inc. ("UL") of the United States. A thickness t of a test piece was set to 1.5 mm.

First, the UL 94V test was performed to determine the classification "V-0", "V-1", or "V-2".

Next, materials classified into "V-0" and "V-1" in the UL 94V test were subjected to the UL 94-5V test to determine the classification "5V-A" or "5V-B".

In the present disclosure, a recycled resin having a flame-retardant property equivalent to 5V was regarded as a good result.

### (Charpy Impact Strength)

An impact test was performed according to ISO 179-1 using a Charpy impact tester.

The test piece had been notched. The higher the measured value (kJ/m²), the better the impact resistance.

A Charpy impact strength of 5.0 (kJ/m²) or more was regarded as a good result.

### (Tensile Strength)

A tensile test was performed according to ISO 527-2 at 23°C. The higher the measured value (MPa), the more excellent the rigidity (i.e., tensile strength).

The resin composition was molded into 80 mm x 10 mm x 4 mm to prepare a measurement sample.

### (Measurement of Bending Strength and Bending Elastic Modulus)

Measurement was performed according to ISO 178.

The resin composition was molded into 80 mm x 10 mm x 4 mm to prepare a measurement sample.

A bending elastic modulus of 2500 MPa or more was regarded as a good result.

### [Example]

The present invention is described in detail with reference to the following Examples but is not limited thereto.

### (Preparation of Crushed Material)

Used copiers and printers, which were manufactured by Ricoh Company, Ltd. and stayed in the market in a period of 5 to 10 years were collected from the market. The copiers and printers were disassembled, and an exterior board including a PC resin and an exterior board including a PC/ABS resin were collected.

Subsequently, dust and dirt attached to the exterior board were removed by air blowing and washing with water, and then labels, screws, nuts, and rubber parts were separated and removed.

Subsequently, the exterior board was put into a granulator (SPCII-750) manufactured by Hermo Co., Ltd. to be crushed, the size of holes of a metal perforated filter was set to 10 mm, and a piece having a particle diameter and a crushed piece of 10 mm or less were selected. The size after crushing is an appropriate size that can be kneaded in the kneading step. Therefore, the size after crushing can be determined in accordance with the specification of the kneader.

In the following Examples, the crushed material obtained as described above was used as a raw material for a thermoplastic resin (i.e., PC resin and PC/ABS resin).

### (Example 1)

As a raw material of a thermoplastic resin, 100% by mass of the PC/ABS resin was prepared.

The above resins were subjected to heating at 250°C using a kneader to obtain a pelletized recycled resin, and the recycled resin was molded to prepare various test samples for evaluating Charpy impact strength, bending strength, bending elastic modulus, tensile strength, and flame retardancy.

Table 1 indicates the test results after various tests.

The recycled resin has a flame-retardant property of 5V, a bending elastic modulus of 2500 MPa or more, and a Charpy impact strength of 5.0 (kJ/m²) or more.

### (Example 2)

As the thermoplastic resin, 20% by mass of the PC resin and 80% by mass of the PC/ABS resin were prepared.

The above resins were mixed under heating at 250°C using a kneader.

After kneading, a pelletized recycled resin was obtained, and the recycled resin was molded to produce various test samples for evaluating Charpy impact strength, bending strength, bending elastic modulus, tensile strength, and flame retardancy.

Table 1 indicates the test results after various tests.

The recycled resin obtained by mixing the above two kinds of resins has a flame-retardant property of 5V, a bending elastic modulus of 2500 MPa or more, and a Charpy impact strength of 5.0 (kJ/m²) or more.

### (Example 3)

As the thermoplastic resin, 40% by mass of the PC resin and 60% by mass of the PC/ABS resin were prepared.

The above resins were mixed under heating at 250°C using a kneader.

After kneading, a pelletized recycled resin was obtained, and the recycled resin was molded to produce various test samples for evaluating Charpy impact strength, bending strength, bending elastic modulus, tensile strength, and flame retardancy.

Table 1 indicates the test results after various tests.

The recycled resin obtained by mixing the above two kinds of resins has a flame-retardant property of 5V, a bending elastic modulus of 2500 MPa or more, and a Charpy impact strength of 5.0 (kJ/m²) or more.

### (Example 4)

As the thermoplastic resin, 60% by mass of the PC resin and 40% by mass of the PC/ABS resin were prepared.

The above resins were mixed under heating at 250°C using a kneader.

After kneading, a pelletized recycled resin was obtained, and the recycled resin was molded to produce various test samples for evaluating Charpy impact strength, bending strength, bending elastic modulus, tensile strength, and flame retardancy.

Table 1 indicates the test results after various tests.

The recycled resin obtained by mixing the above two kinds of resins has a flame-retardant property of 5V, a bending elastic modulus of 2500 MPa or more, and a Charpy impact strength of 5.0 (kJ/m²) or more.

### (Example 5)

As the thermoplastic resin, 80% by mass of the PC resin and 20% by mass of the PC/ABS resin were prepared.

The above resins were mixed under heating at 250°C using a kneader.

After kneading, a pelletized recycled resin was obtained, and the recycled resin was molded to produce various test samples for evaluating Charpy impact strength, bending strength, bending elastic modulus, tensile strength, and flame retardancy.

Table 1 indicates the test results after various tests.

The recycled resin obtained by mixing the above two kinds of resins has a flame-retardant property of 5V, a bending elastic modulus of 2500 MPa or more, and a Charpy impact strength of 5.0 (kJ/m²) or more.

### (Example 6)

As the thermoplastic resin, 100% by mass of the PC resin was prepared.

The above resins were heated at 250°C using a kneader to obtain a pelletized recycled resin, and the recycled resin was molded to produce various test samples for evaluating Charpy impact strength, bending strength, bending elastic modulus, tensile strength, and flame retardancy.

Table 1 indicates the test results after various tests.

The recycled resin has a flame-retardant property of 5V, a bending elastic modulus of 2500 MPa or more, and a Charpy impact strength of 5.0 (kJ/m²) or more.

In the above-described Examples 1 to 6, the recycled material including the PC resin and/or the PC/ABS resin are described as examples, but an additive such as a Charpy impact strength modifier may be added to improve the Charpy impact strength as appropriate.

In Examples 7 to 10 described below, 2% by mass of the Charpy impact strength modifier was added.

### (Example 7)

As the thermoplastic resin, 19% by mass of the PC resin, 79% by mass of the PC/ABS resin, and 2% by mass of the Charpy impact strength modifier were prepared.

The above resins were mixed under heating at 250°C using a kneader.

After kneading, a pelletized recycled resin was obtained, and the recycled resin was molded to produce various test samples for evaluating Charpy impact strength, bending strength, bending elastic modulus, tensile strength, and flame retardancy.

Table 1 indicates the test results after various tests.

The recycled resin obtained by mixing the above two kinds of resins has a flame-retardant property of 5V, a bending elastic modulus of 2500 MPa or more, and a Charpy impact strength of 5.0 (kJ/m²) or more.

In particular, an improvement in the Charpy impact strength is confirmed.

### (Example 8)

As the thermoplastic resin, 39% by mass of the PC resin, 59% by mass of the PC/ABS resin, and 2% by mass of the Charpy impact strength modifier were prepared.

The above resins were mixed and kneaded under heating at 250°C using a kneader, then a pelletized recycled resin was obtained, and the recycled resin was molded to produce various test samples for evaluating Charpy impact strength, bending strength, bending elastic modulus, tensile strength, and flame retardancy.

Table 1 indicates the test results after various tests.

The recycled resin obtained by mixing the above two kinds of resins has a flame-retardant property of 5V, a bending elastic modulus of 2500 MPa or more, and a Charpy impact strength of 5.0 (kJ/m²) or more.

In particular, an improvement in the Charpy impact strength is confirmed.

### (Example 9)

As the thermoplastic resin, 59% by mass of the PC resin, 39% by mass of the PC/ABS resin, and 2% by mass of the Charpy impact strength modifier were prepared.

The above resins were mixed under heating at 250°C using a kneader.

After kneading, a pelletized recycled resin was obtained, and the recycled resin was molded to produce various test samples for evaluating Charpy impact strength, bending strength, bending elastic modulus, tensile strength, and flame retardancy.

Table 1 indicates the test results after various tests.

The recycled resin obtained by mixing the above two kinds of resins has a flame-retardant property of 5V, a bending elastic modulus of 2500 MPa or more, and a Charpy impact strength of 5.0 (kJ/m²) or more.

In particular, an improvement in Charpy impact strength is confirmed.

### (Example 10)

As the thermoplastic resin, 79% by mass of the PC resin, 19% by mass of the PC/ABS resin, and 2% by mass of the Charpy impact strength modifier were prepared.

The above resins were mixed under heating at 250°C using a kneader.

After kneading, a pelletized recycled resin was obtained, and the recycled resin was molded to produce various test samples for evaluating Charpy impact strength, bending strength, bending elastic modulus, tensile strength, and flame retardancy.

Table 1 indicates the test results after various tests.

The recycled resin obtained by mixing the above two kinds of resins has a flame-retardant property of 5V, a bending elastic modulus of 2500 MPa or more, and a Charpy impact strength of 5.0 (kJ/m²) or more.

In particular, an improvement in the Charpy impact strength is confirmed.

Table 1 indicates the compositions and physical properties of the recycled resins obtained in Examples 1 to 10.

**Table 1**

| | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 |
|---|---|---|---|---|---|---|---|---|---|---|
| PC/ABS (% BY MASS) | 100 | 80 | 60 | 40 | 20 | 0 | 79 | 59 | 39 | 19 |
| PC (% BY MASS) | 0 | 20 | 40 | 60 | 80 | 100 | 19 | 39 | 59 | 79 |
| CHARPY IMPACT STRENGTH MODIFIER (% BY MASS) | | | | | | | 2 | 2 | 2 | 2 |
| TOTAL (% BY MASS) | 100 | 100 | 100 | 100 | 100 | 100 | 100 | 100 | 100 | 100 |
| CHARPY IMPACT STRENGTH (kJ/m²) | 5.87 | 6.48 | 6.36 | 6.7 | 7.08 | 7.4 | 9.49 | 9.58 | 9.84 | 11.51 |
| BENDING STRENGTH (MPa) | 91.6 | 92.2 | 96.8 | 97.1 | 97.3 | 96.5 | 89.2 | 89.3 | 89.7 | 90 |
| BENDING ELASTIC MODULUS (MPa) | 2,933 | 2,876 | 2,877 | 2,799 | 2,720 | 2,738 | 2,697 | 2,702 | 2,663 | 2,555 |
| TENSILE STRENGTH (MPa) | 57.1 | 59.8 | 60.9 | 61.7 | 62.5 | 62 | 55.7 | 57.9 | 58.5 | 59.4 |
| FLAME RETARDANCY | 5V,V-0 | 5V,V-0 | 5V,V-0 | 5V,V-0 | 5V,V-0 | 5V,V-0 | 5V,V-0 | 5V,V-0 | 5V,V-0 | 5V,V-0 |

Aspects of the present invention are as follows, for example.

### (Aspect 1)

A method for producing a recycled resin, to recycle a resin, using a collected material being a resin product comprising a thermoplastic resin as a raw material. The thermoplastic resin has a flame-retardant property equivalent to 5V and comprises the following (A), (B), or (C).:
(A) a polycarbonate resin ("PC resin");
(B) a mixed resin ("PC/ABS resin") of a PC resin with an acrylonitrile-butadiene-styrene copolymer resin ("ABS resin"); or
(C) a mixture of a PC resin and a PC resin/ABS resin.

The method includes:
collecting, as a collected material, a part of a product used in a market;
removing seals and particles adhering to the part (i.e., collected material) collected in the collecting;
crushing the part (i.e., collected material) after the removing to obtain a crushed material; and
mixing and kneading the crushed material obtained in the crushing with a Charpy strength modifier for a PC resin to obtain a recycled resin.

The recycled resin has:
a content of the Charpy strength modifier of less than 10% by mass,
a flame-retardant property equivalent to 5V, and
a bending elastic modulus of 2500 MPa or more and a Charpy impact strength of 5.0 kJ/m² or more.

### (Effect of Aspect 1)

A recycled resin having a flame-retardant property of 5V in the UL flammability test and also having a bending elastic modulus of 2500 MPa or more and a Charpy impact strength of 5.0 kJ/m² or more, as strength properties, can be produced at a high cutting rate (i.e., collected material loading rate).

### (Aspect 2)

The method according to Aspect 1, in which the resin product as the collected material is produced using a recycled resin.

### (Effect of Aspect 2)

The thermoplastic resin can be recycled as a material multiple times.

### (Aspect 3)

The method according to Aspect 1, further including, after the mixing and kneading of the crushed material with the Charpy strength modifier to obtain the recycled resin, producing a product in the same category as the product used in the market.

### (Effect of Aspect 3)

The recycled resin can be recycled as a material for a product.

### (Aspect 4)

A recycled resin comprising a collected material being a resin product comprising a thermoplastic resin.

The thermoplastic resin has a flame-retardant property equivalent to 5V and comprises the following (A), (B), or (C):
(A) a polycarbonate resin ("PC resin");
(B) a mixed resin ("PC/ABS resin") of a PC resin with an acrylonitrile-butadiene-styrene copolymer resin ("ABS resin"); or
(C) a mixture of a PC resin and a PC resin/ABS resin.

The recycled resin further comprises a Charpy strength modifier for a PC resin in an amount of less than 10% by mass of the recycled resin.

The recycled resin has:
a flame-retardant property equivalent to 5V, and
a bending elastic modulus of 2500 MPa or more and a Charpy impact strength of 5.0 kJ/m² or more.

### (Effect of Aspect 4)

A recycled resin having a flame-retardant property equivalent to 5V and also a bending elastic modulus of 2500 MPa or more and a Charpy impact strength of 5.0 kJ/m² or more, as strength properties, can be provided at a high cutting rate (i.e., collected material loading rate).

Any one of the above-described operations may be performed in various other ways, for example, in an order different from the one described above.

## Claims

1. A method for producing a recycled resin, the method comprising:
collecting, as a collected material, a resin product comprising a thermoplastic resin as a part of a product used in a market;
removing seals and particles adhering to the collected material collected in the collecting;
crushing the collected material after the removing to obtain a crushed material; and
mixing and kneading the crushed material obtained in the crushing with a Charpy strength modifier for a polycarbonate resin to obtain a recycled resin,
wherein the thermoplastic resin has a flame-retardant property equivalent to 5V and comprises at least one selected from the group consisting of (A), (B), and (C) below:
(A) a polycarbonate resin;
(B) a mixed resin of a polycarbonate resin with an acrylonitrile-butadiene-styrene copolymer resin; and
(C) a mixture of a polycarbonate resin and a mixed resin of a polycarbonate resin with an acrylonitrile-butadiene-styrene copolymer resin, and
wherein the recycled resin has:
a content of the Charpy strength modifier of less than 10% by mass,
a flame-retardant property equivalent to 5V, and
a bending elastic modulus of 2500 MPa or more and a Charpy impact strength of 5.0 kJ/m² or more.

2. The method according to claim 1, wherein the resin product as the collected material is produced using a recycled resin.

3. The method according to claim 1, further comprising:
after the mixing and kneading, producing a product in the same category as the product used in the market.

4. A recycled resin comprising:
a collected material being a resin product comprising a thermoplastic resin; and
a Charpy strength modifier for a polycarbonate resin in an amount of less than 10% by mass of the recycled resin,
wherein the thermoplastic resin has a flame-retardant property equivalent to 5V and comprises at least one selected from the group consisting of (A), (B), and (C) below:
(A) a polycarbonate resin;
(B) a mixed resin of a polycarbonate resin with an acrylonitrile-butadiene-styrene copolymer resin ; and
(C) a mixture of a polycarbonate resin and a mixed resin of a polycarbonate resin with an acrylonitrile-butadiene-styrene copolymer resin,
wherein the recycled resin has:
a flame-retardant property equivalent to 5V, and
a bending elastic modulus of 2500 MPa or more and a Charpy impact strength of 5.0 kJ/m² or more.
